(19) Europäisches Patentamt
European Patent Office
Office européen des brevets

(11) EP 1 223 152 A2

(12) **EUROPEAN PATENT APPLICATION**

(43) Date of publication:
**17.07.2002 Bulletin 2002/29**

(51) Int Cl.$^7$: **C05F 17/00**, C05F 9/04

(21) Application number: **02000809.0**

(22) Date of filing: **14.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.01.2001 JP 2001005302**
**26.12.2001 JP 2001395509**

(71) Applicant: **SHOWA DENKO K.K.**
**Tokyo 105-8518 (JP)**

(72) Inventors:
- **Kitankuni, Eiichi, Central Research Laboratory Chiba-shi, Chiba 267-0056 (JP)**
- **Nakano, Katsuharu, Central Research Laboratory Chiba-shi, Chiba 267-0056 (JP)**
- **Tagoshi, Hirotaka, Minato-ku, Tokyo 105-8518 (JP)**
- **Ishii, Tetsuya, Central Research Laboratory Kawasaki-shi, Kanagawa 210-0867 (JP)**
- **Ihioka, Nobuya Kawasaki-shi, Kanagawa 210-0867 (JP)**

(74) Representative: **Strehl Schübel-Hopf & Partner**
**Maximilianstrasse 54**
**80538 München (DE)**

(54) **Decomposition method of hydrophilic polymer**

(57) The invention relates to a method for decomposing hydrophilic polymers, comprising contacting a hydrophilic polymer or a hydrophilic polymer-containing material with a microorganism at a temperature of 40 to 95°C under aerobic conditions.

EP 1 223 152 A2

## Description

### Application Field in Industry

The present invention relates to a method for decomposing hydrophilic polymers, comprising decomposing a hydrophilic polymer or a hydrophilic polymer-containing material using a microorganism at a temperature of 40 to 95°C under aerobic conditions.

More specifically, the present invention relates to a method of charging a hydrophilic polymer or a hydrophilic polymer-containing material to be treated (in the present invention, these are collectively referred to as "a hydrophilic polymer") into a compost such as manure, muck and so-called compost (in the present invention, this includes a compost containing an organic waste before treatment in which a fermented compost is mixed, a compost fermented with manure, muck or high-speed manure reactor, and a compost extract), where the hydrophilic polymer is decomposed under the action of microorganisms in the compost and recycled as a resource or biodegraded not to accumulate on the earth.

### Background Art

In recent years, hydrophilic polymers are used over a wide range, for example, in fiber working, thickener, dispersant, emulsifier, paper making, water treatment coagulant, soil improver, slurry inhibitor, and water absorbent of disposable diapers or sanitary supplies, and the amount used thereof is increasing. These are usually harmless, however, from the standpoint of global environmental conservation, it is not preferred to bury a large amount of polymer or discard it in river or sea. Furthermore, burning of polymers used as a coagulant or a water absorbent and containing a large amount of water is not preferred because a large amount of water must be evaporated and huge energy is necessary for the evaporation. Accordingly, development of a treating method capable of preventing the accumulation of polymer without fail and being inexpensive, safe and suitable for the global environmental conservation, is demanded.

If these hydrophilic polymer-containing materials, for example, water absorptive or water-soluble polymers (in the present invention, these are collectively called "hydrophilic polymers"), can be biodegraded using microorganisms naturally occurring in the global environment, the treatment can be performed with safe and without incurring environmental pollution and this is preferred. However, a method of decomposing water-absorptive or hydrophilic polymers having a high molecular weight directly by microorganisms without passing through a pre-treatment has not yet been reported.

On the other hand, with respect to sodium polyacrylate, JP-A-6-9721 discloses a method of oxidizing and/or photolyzing a polymer into a water-soluble polymer having a molecular weight of 1,000 or less and further decomposing the polymer using activated sludge. Also, JP-A-5-247126 and JP-A-6-47396 disclose a method of decomposing a polymer using activated sludge. However, these methods all have a problem in that not only large-volume treatment equipment is necessary but also the decomposition takes a long time or scarcely proceeds.

Furthermore, JP-A-5-237200 discloses a method of decomposing a hydrophilic acrylic acid-base polymer using bacteria belonging to the genus *Arthrobacter,* however, in the Examples, only sodium polyacrylate having a low molecular weight is degraded. In any of these methods, the treatment must be performed by dissolving a small amount of polymer in a large amount of culture medium.

As for the decomposition method of hydrophilic polymers, for example, it is found in JP-A-5-237200 that bacteria belonging to the genus *Arthrobacter* can assimilate an acrylic acid-base polymer using the acrylic acid-base polymer as a carbon source. However, in the Examples, when sodium polyacrylate having an average molecular weight of 2,000 or less is degraded, the degradation degree is at largest approximately from 30 (average molecular weight: 2,000) to 60% (average molecular weight: 1,000) in 40 culture days and complete degradation is not attained.

The optimal growth temperature of bacteria belonging to the genus *Arthrobacter* disclosed, for example, in JP-A-5-237200 is from 30 to 40°C and therefore, these bacteria cannot grow or can hardly grow under the above-described high-temperature culture condition.

JP-A-6-47396 states that the genus *Microbacterium, Xanthomonas maltophilia* W1, *Acinetobacter* genospecies is effective as a microorganism capable of degrading acryl monomers and acryl oligomers. However, the growth temperature region is from 28 to 30°C in the Examples and this microorganism cannot also grow or can hardly grow under the high temperature condition constituting the present invention.

In order to prevent the accumulation of these water-soluble or hydrophilic polymers, a method of decomposing the polymers using chemical decomposition or by a biological treatment have been heretofore generally studied.

For example, a method of decomposing hydrophilic acrylic acid-base polymers by using bacteria belonging to the genus *Arthrobacter* (see, JP-A-5-237200) (the term "JP-A" as used herein means an "unexamined published Japanese patent application") and a method of biodegrading acryl monomers or acryl oligomers by microorganisms (see, JP-A-6-47396) have been proposed. However, these methods have a problem in that the polymer treated is

water-soluble and must be in the form of an aqueous solution having a low concentration at the treatment and therefore, a treating apparatus having a large volume is necessary.

Also, a method of oxidizing and/or photolyzing a hydrophilic acrylic acid polymer to reduce the molecular weight to 1,000 or less and then decomposing the polymer using an active sludge (see, JP-A-6-9721), and a method of decomposing a water-soluble polymer in the presence of an oxidizing agent, a hydroquinone and an iron or copper ion and then biodegrading the decomposed polymer (see, JP-A-11-172039) have been proposed. However, these methods each requires a large amount of oxidant for reducing the molecular weight based on the polymer and cannot be implemented in view of the profitability.

On the other hand, with the tendency to recycle compostable organic wastes such as garbage from homes or fallen leaves and re-use these as a compost, studies are being aggressively made to compost and recycle biodegradable polymers such as aliphatic polyester together with the organic wastes.

One of major uses of the water absorptive polymer is disposal diaper making use of the water absorptivity and if the disposal diaper waste can be composted and recycled, this is no doubt a truly epoch-making progress of solving the environmental problem united with the discarding of disposal diapers at a burst.

Such a treating method itself has been studied, however, in any method, the efficiency is low, the equipment costs highly and the running cost is high. In fact, a method for treating polymers having a high molecular weight with profitability and without fail has not been heretofore proposed.

**Problems to be Solved by the Invention**

The object of the present invention is to develop a method capable of, despite small scale, inexpensively, easily and effectively decomposing or recycling hydrophilic polymers or organic wastes containing a hydrophilic polymer without contaminating the environment.

**Means to Solve the Problems**

As a result of extensive investigations to attain the above-described object, the present inventors have developed:

1.) A method for decomposing hydrophilic polymers, comprising contacting a hydrophilic polymer or a hydrophilic polymer-containing material with a microorganism at a temperature of 40 to 95°C under aerobic conditions;
2.) the method according to 1.) above, wherein the microorganism is contained in a compost;
3.) the method according to 2.) above, wherein the compost is a compost manufactured based on an organic waste;
4.) the method for decomposing hydrophilic polymers as described in any one of 1.) to 3.) above, wherein the microorganism is at least one microorganism selected from the group consisting of the genera *Rhizopus, Saccharomyces, Candida, Aspergilllus, Penicillium, Trichodema, Streptomyces, Frankia, Azotobacter* and *Bacillus;*
5.) the method for decomposing hydrophilic polymers as described in any one of 1.) to 4.) above, wherein the hydrophilic polymer is a water-soluble polymer or a crosslinked polymer thereof;
6.) the method for decomposing hydrophilic polymers as described in any one of 1.) to 5.) above, wherein the hydrophilic polymer is a (co)polymer containing a monomer unit of the (meth)acrylic acid type;
7.) the method for decomposing hydrophilic polymers as described in any one of the preceding points, wherein the hydrophilic polymer is a copolymer crosslinked by a polymerizable crosslinking agent or a reactive crosslinking agent;
8.) the method for decomposing hydrophilic polymers as described in any one of the preceding points, wherein the hydrophilic polymer-containing material is any one of hydrous sludge, excavation surplus soil, construction sludge, agglomerate aggregated by a coagulant, and a medical or industrial waste cake;
9.) the method for decomposing hydrophilic polymers as described in any one of the preceding points, wherein the amount of water contained in the material to be treated is previously adjusted;
10.) the method for decomposing hydrophilic polymers as described in 9.) above, wherein the water is absorbed by the polymer;
11.) the method for decomposing hydrophilic polymers as described in any one of the preceding points, wherein the internal temperature of the compost is kept at 40 to 90°C;
12.) the method for decomposing hydrophilic polymers as described in any one of the preceding points, wherein the temperature is at least 45°C;
13.) the method for decomposing hydrophilic polymers as described in any one of the preceding points, wherein the temperature is 55 to 90°C;
14.) a compost obtainable by decomposing a hydrophilic polymer or a hydrophilic polymer-containing material by the decomposition method as described in any one of 1) to 13.) above;

15.) the use of a compost according to 14.) above in agriculture, horticulture, slope face greening or general greening;
16.) the use of a compost according to 14.) above as a road-bed material for roads, grounds or golf links.

The above-described object can be attained by these.

**Mode for Carrying out the Invention**

The present invention relates to a method for decomposing hydrophilic polymers, comprising decomposing a hydrophilic polymer or a hydrophilic polymer-containing material using a microorganism at a temperature of 40 to 95°C under aerobic conditions.
Examples of the microorganism which used for the prevent invention include lactic acid bacteria such as the genus *Rhizopus;* yeast bacteria such as the genera *Saccharomyces* and *Candida;* mold such as the genera *Aspergilllus, Penicillium* and *Trichodema;* ray fungi such as the genera *Streptomyces* and *Frankia;* and other bacteria such as the genera *Azotobacter* and *Bacillus,* however, the present invention is not limited thereto.
The hydrophilic polymer to be decomposed according to the method of the invention may have any molecular weight. However, the molecular weight of the polymer is preferably at least 5,000, more preferably 10,000 to 5,000,000 and even more preferably 50,000 to 2,000,000.
The term "hydrophilic polymer" as used herein includes any one of the following three types of polymers:

(1) a water absorbent resin which is cross-linked by a cross-linking agent as described below;
(2) a microgel wherein the ratio of cross-linking agent/monomer is less than 0.0001/99.9999;
(3) a straight chain type polymer wherein the ratio of cross-linking agent/monomer exceeds 10/90.

The hydrophilic polymer to which the present invention can applied include hydrophilic polymers over a wide range, for example, homopolymers such as cellulose-base polymer, water-soluble vinyl-base polymer, water-soluble acrylic acid-base polymer and acrylamide-base polymer, and synthetic polymers such as crosslinked hydrophilic polymer.
The fundamental structure of the (meth)acrylic acid (or a salt thereof) polymer (hydrophilic polymer) as used in the present invention is a polymer selected from the group consisting of (co)polymers having a repeating unit represented by formula (1):

[Chem. 1]

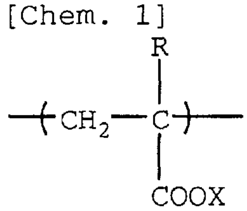

(1)

(wherein X represents any one of a hydrogen atom, a monovalent metal, a divalent metal, a trivalent metal, an ammonium group and an organic ammonium group, R represents a hydrogen atom or a methyl group, and when X is a divalent or trivalent metal, each bond is combined with one or two counter ions of $-(CH_2-CR)-COO^-$-) and/or polymers comprising this (co)polymer.
The term "a (co)polymer" as used in the present invention means either one or both of a homopolymer and a copolymer. Among these, preferred are the (co)polymers in which at least 50% by mol or more of the repeating units constituting the (co)polymer are occupied by the repeating unit.
Examples thereof include polyglutamic acid, polyaspartic acid, methyl cellulose, ethyl cellulose, propyl cellulose, ethyl methyl cellulose, hydroxy cellulose, hydroxyalkyl cellulose, hydroxypropylmethyl cellulose, hydroxypropyl starch, carboxymethyl starch, alkali metal carboxymethyl cellulose, alkali metal cellulose sulfate, cellulose graft polymer, crosslinked gelatin, cellulose acetate phthalate, starch-acrylic acid graft polymer, phthalic acid anhydride-modified gelatin and succinic acid-modified gelatin.
Other examples include polyvinyl alcohol, polyvinyl pyrrolidone, polyvinyl methyl ether, methyl vinyl ester, poly (meth)acrylate (e.g., sodium poly(meth)acrylate), carboxyvinyl polymer, vinyl pyrrolidone-ethyl (meth)-acrylate copolymer, vinyl pyrrolidone-styrene copolymer, vinyl pyrrolidone-vinyl acetate copolymer, polyvinyl acetate-(meth)acrylic acid (or a salt thereof) copolymer, polyvinyl acetate-crotonic acid copolymer, vinyl acetate-(meth)acrylic acid copolymer, vinyl acetate-crotonic acid copolymer, polyvinyl sulfonic acid, polyitaconic acid, polyhydroxyethyl (meth)acrylate, poly(meth)acrylamide, styrene-maleic acid anhydride copolymer, (meth)acrylamide-(meth)acrylic acid copolymer. However, the present invention is not limited thereto.

Examples of the crosslinked hydrophilic polymer include poly(meth)acrylic acid (or a salt thereof) polymers such as potassium poly(meth)acrylate and sodium poly(meth)acrylate, saponified products of poly(meth)-acrylonitrile, (meth)acrylic acid (or a salt thereof)/vinyl alcohol copolymers, starch/(meth)acrylic acid (or a salt thereof) graft copolymers, saponified products of starch/(meth)acrylonitrile graft copolymers, cellulose/(meth)acrylic acid (or a salt thereof) graft copolymers, poly(meth)acrylamides and partial hydrolysates thereof, polyvinyl alcohols, polyethylene oxides, neutralized products of starch-(meth)acrylic acid (or a salt thereof) graft copolymers, sodium salts of saponified products of vinyl acetate-methyl (meth)acrylate copolymers, isobutylene-maleic acid anhydride copolymers, polyvinyl alcohol-maleic acid ester-base copolymers, (meth)-acrylamide-potassium (meth)acrylate copolymers, starch-poly(meth)acrylonitrile graft copolymers, polyalkylene oxides, vinyl ester-ethylene-base unsaturated carboxylic acid copolymers, poly (meth)acrylic acids, and polyvinyl alcohol/sodium maleic acid anhydride copolymers.

As for the crosslinking agent used in the production of these crosslinked polymers, in the case of polymers, a compound having two or more unsaturated bonds within a molecule can be used.

Other examples include compounds having a plurality of acrylamide structures or (meth)acryl groups, such as N,N'-methylenebisacrylamide, ethylene glycol di(meth)acrylate, diethylene glycol di(meth)acrylate, triethylene glycol di(meth)acrylate, polyethylene glycol di(meth)acrylate, trimethylol propane tri(meth)acrylate and pentaerythritol tri (meth)acrylate; and compounds having two or more unsaturated groups within one molecule, such as divinyl benzene, divinyl ether and allyl (meth)acrylate. These crosslinking agents can be used individually or in combination of two or more thereof.

Examples of the compound having two or more vinyl ester structures within one molecule include compounds having two or more vinyl ester structures, such as divinyl oxalate, divinyl malonate, divinyl succinate, divinyl glutarate, divinyl adipate, divinyl pimelate, divinyl maleate, divinyl fumarate, trivinyl citrate, trivinyl trimellitate and tetravinyl pyromellitate.

Other examples include compounds having two or more unsaturated groups within one molecule, such as tetraallyloxyethane, pentaerythritol polyallyl ether, diethylene glycol diallyl ether, tetraallyl pyromellitate, triallyl trimellitate, diallyl adipate, diallyl terephthalate, diallyl isophthalate and divinyl adipate. These crosslinking monomers can be used individually or in combination of two or more thereof.

The amount of the crosslinking agent used cannot be indiscriminately specified because the blend ratio thereof varies depending on the use end of the hydrophilic polymer, however, for example, the ratio of crosslinking agent/monomer is, in terms of the molar ratio, from 10/90 to 0.0001/99.9999, preferably from 1/99 to 0.0005/99.9995.

If the amount of the crosslinking agent exceeds 10/90 in terms of the molar ratio of crosslinking agent/monomer, the water-absorptive resin is excessively increased in the crosslinking density and therefore, greatly reduced in the swelling degree, as a result, the effect as a water-absorptive resin cannot be substantially exerted.

On the other hand, if the ratio of crosslinking agent/monomer is, in terms of the molar ratio, less than 0.0001/99.9999, a water-soluble polymer participating in the crosslinking increases, as a result, the performance as a water-absorptive resin cannot be substantially exerted.

The production process for the resin is not necessarily limited, however, in the case of a synthetic polymer, the resin is preferably produced by aqueous solution polymerization, reversed phase suspension polymerization, reversed phase emulsion polymerization or the like. The polymers adhering to the inside of the apparatus for producing these hydrophilic polymers can also be easily decomposed by the present invention.

The method of the present invention is suitable for the treatment of crosslinked acrylic acid (or a salt thereof)-base polymers having a high molecular weight, which are produced in a largest amount among those polymers and are being widely used.

The fundamental main chain structure of the (meth)acrylic acid (or a salt thereof)-base polymer used as a hydrophilic polymer includes those where the whole or a part of the (meth)acrylic acid represented by chemical formula (1) are two or more monovalent metal salts such as sodium or potassium, two or more divalent metal salts such as calcium or magnesium, two or more trivalent metal salts such as trivalent iron salt, two or more ammonium salts, or two or more organic amine salts. The (meth)acrylic acid (or a salt thereof)-base polymer as used in the present invention further includes those treated and modified by the method described below.

Hydrophilic polymers as a (co)polymer obtained by copolymerizing a (meth)acrylic acid (or a salt thereof) with a compound copolymerizable with the (meth)acrylic acid (or a salt thereof) monomer can also be an objective polymer of the decomposition method according to the present invention.

The kind and the amount copolymerized of the compound copolymerizable with the (meth)acrylic acid (or a salt thereof) for use in the present invention need not be limited insofar as the copolymerized polymer with the (meth) acrylic acid (or a salt thereof) does not lose the hydrophilicity.

Specific examples of the compound copolymerizable with the (meth)acrylic acid (or a salt thereof) for use in the present invention include monoethylenically unsaturated carboxylic acids such as monoethylenically unsaturated

carboxylic acid (e.g., itaconic acid, citraconic acid, aconitic acid) and monovalent metal salt, divalent metal salt, trivalent metal salt, ammonium salt and organic amine salt thereof; α-olefins having from 2 to 4 carbon atoms such as ethylene, propylene, isobutylene and n-butylene;

alkyl esters having from 4 to 8 carbon atoms of acrylic acid and methacrylic acid, such as methyl (meth)acrylate, ethyl (meth)acrylate, isopropyl (meth)acrylate, n-propyl (meth)acrylate, n-butyl (meth)acrylate and isobutyl (meth)acrylate; hydroxylalkyl esters having from 5 to 8 carbon atoms of acrylic acid and methacrylic acid, such as hydroxyethyl (meth) acrylate, hydroxy-n-propyl (meth)-acrylate, hydroxyisopropyl (meth)acrylate, hydroxy-n-butyl (meth)acrylate and hydroxyisobutyl (meth)acrylate;

polyether mono(meth)acrylates such as polyethylene glycol mono(meth)acrylate, polypropylene glycol mono(meth) acrylate and polyethylene glycol polypropylene glycol mono-(meth)acrylate; sulfoalkyl (meth)acrylates having from 4 to 10 carbon atoms, such as 2-sulfoethyl (meth)acrylate, 2-sulfopropyl (meth)acrylate, 3-sulfopropyl (meth)acrylate, 1-sulfopropan-2-yl (meth)acrylate, 2-sulfobutyl (meth)-acrylate, 3-sulfobutyl (meth)acrylate, 4-sulfobutyl (meth)acrylate, 1-sulfobutan-2-yl (meth)acrylate, 1-sulfobutan-3-yl (meth)acrylate, 2-sulfobutan-3-yl (meth)acrylate, 2-methyl-2-sulfopropyl (meth)acrylate and 1,1-dimethyl-2-sulfoethyl (meth)acrylate;

sulfoalkoxy polyalkylene glycol mono(meth)acrylates having from 7 to 197 carbon atoms, such as sulfoethoxy polyethylene glycol mono(meth)acrylate, sulfopropoxy polyethylene glycol mono(meth)acrylate and sulfobutoxy polyethylene glycol mono(meth)acrylate, and monovalent metal salts, divalent metal salts, trivalent metal salts, ammonium salts and organic amine salts thereof;

aromatic vinyls having from 8 to 10 carbon atoms, such as styrene and p-methyl styrene; aminoethyl (meth)acrylates having from 5 to 10 carbon atoms, such as dimethylaminoethyl (meth)acrylate and diethylaminoethyl (meth)-acrylate; (meth)acrylamides having from 3 to 12 carbon atoms, such as (meth)acrylamide, dimethylaminopropyl-(meth)acrylamides and diethyl aminopropyl (meth)acrylamides; monoethylenically unsaturated phosphonic acids having from 2 to 4 carbon atoms, such as 2-acrylamide-2-methylsulfonic acid, vinylsulfonic acid and allylsulfonic acid; and additionally, (meth)acrylonitrile, acrolein and allyl alcohol. These compounds can be used individually or in combination of two or more thereof.

In addition, polymers modified with a compound capable of reacting with the functional group contained in the above-described polymers can also be an objective of the treatment of the present invention insofar as the hydrophilicity of the polymer is not lost.

Specific examples of the compound used for the modification include polyhydric alcohols such as ethylene glycol, triethylene glycol, tetraethylene glycol, polyethylene glycol, glycerol, polyglycerol, propylene glycol, polyoxypropylene, oxyethylene oxypropylene block copolymer, diethanol amine, triethanol amine, pentaerythritol, sorbitol, sorbitan fatty acid ester, hydroxy acetic acid glycol monoester, lactic acid glycol monoester, hydroxyl pivalic acid neopentylene glycol ester, polyvinyl alcohol, and saponified product of polyvinyl acetate;

lactone polymers containing a hydroxyl group at both terminals, such as poly δ-caprolactone containing a hydroxyl group at both terminals; polyvalent glycidyl compounds such as ethylene glycol glycidyl ether, polyethylene glycol diglycidyl ether, glycerol polyglycidyl ether, polyglycerol polyglycidyl ether, diglycerol polyglycidyl ether, polyglycerol polyglycidyl ether, sorbitol polyglycidyl ether, pentaerythritol polyglycidyl ether, propylene glycol diglycidyl ether, polypropylene glycol diglycidyl ether, resorcinol diglycidyl ether, 1,6-hexanediol diglycidyl ether, adipic acid diglycidyl ester, o-phthalic acid diglycidyl ester, terephthalic acid diglycidyl ester, and glycidyl ester ether of p-hydroxy benzoic acid; polyvalent amines such as ethylenediamine, diethylenetriamine, triethylenetetramine, tetraethylenepentamine, pentaethylenehexamine, polyethyleneimine and phenylenediamine; polyvalent aziridines such as 2,2-bishydroxymethyl butanol-tris[3-(1-aziridinyl)propionate], 1,6-hexamethylenediethyleneurea and diphenylmethane-bis-4,4'-N,N'-diethyleneurea; polyvalent aldehydes such as glutaraldehyde and glyoxal; and polyvalent isocyanates such as 2,4-toluylene diisocyanate and hexamethylene diisocyanate. These compounds are used individually or in combination of two or more thereof. These crosslinked polymers can be produced in the same manner as the above-described crosslinked hydrophilic polymer.

The compost mixed with the hydrophilic polymer-containing material to be treated in the present invention is not particularly limited, however, in the case of practicing the method at home, the compost is preferably a manure matured by an aerobic microbial fermentation.

The compost for use in the present invention is preferably a so-called high-speed manure using an organic waste as a starting material. In the general procedure, an organic waste is discharged into a fermentation tank, rapidly fermented in a reactor operated at 40 to 90°C, preferably from 55 to 90°C, to reduce the volume and then allowed to stand at room temperature in a cool and dark place while occasionally stirring, thereby completing the composting. This method is performed at a high temperature and therefore, harmful microorganisms such as pathogenic germ are prevented from mingling into the compost and a compost of good quality can be fermented by a specific high-temperature active microorganism.

In the present invention, the composting treatment may be performed by mixing the thus-obtained compost or may be performed further together with an organic waste yielded at home.

In the case of producing a compost using a general organic waste such as garbage discarded from each home, undecomposable plastics such as polyethylene must be previously removed. However, according to the present invention, the hydrophilic polymer can be discarded and treated in the same manner as garbage or biodegradable plastics such as aliphatic polyester.

In this case, there arises no problem even if hydrophilic polymers as a carbon source are mixed in the material to be treated, individually or in combination of two or more thereof.

Also, composts based on excrements of livestock such as cattle, swine and chicken are useful. The livestock excrements are generally poor in the ventilation because of their high water content and hardly allow the mingling of oxygen and therefore, their fermentation proceeds in an anaerobic atmosphere. However, when a hydrophilic polymer-containing material to be treated is mixed, the amount of water in the excrement can be controlled by making use of the water absorptivity of the hydrophilic polymer and highly ventilated conditions can be created, as a result, an aerobic fermentation is accelerated, the temperature is elevated, and a compost of good quality can be produced.

According to the treating method of the present invention, not only hydrophilic polymers are decomposed but also the livestock excrement treatment which has been heretofore a problem in the dairy industry can be solved at a stroke.

Examples of the material to be treated, which is added for the composting, include hydrophilic polymer-containing disposal diaper and sanitary materials, pet urine treating agent, hydrous sludge, excavation surplus soil, construction sludge, agglomerate aggregated by a coagulant, culture medium for mushroom or callus, gel used for miscellaneous daily necessaries such as fragrance and deodorant, film, nonwoven fabric, fiber, pressure-sensitive adhesive, adhesive, coating material, fiber treating agent, paper manufacture waste liquid agglomerate, soil, culture soil, medical waste liquid coagulate, and industrial waste liquid cake.

In the process of examining the decomposition behavior of hydrophilic polymers in a compost, the present inventors have found that the decomposition reaction is affected by the moisture present around the polymer.

In the present invention, the water amount of giving microorganism activity most suitable for the decomposition is approximately from 30 to 75%, preferably 40 to 60%, of the maximum volume water amount of the compost (ratio (%) of weight where water can be maximally absorbed, to the dry weight). If the water amount of the compost is less than 30%, the compost is dried and the microorganism activity is disadvantageously diminished, whereas if the water amount exceeds 75%, the degrading ability decreases and the water must be previously supplied to the compost to keep the water amount within the above-described range.

The amount of water absorbed by the water absorbent resin as the hydrophilic polymer is preferably at least 1.1 times the weight of the dried polymer, more preferably 5 to 40 times the weight of the dried polymer, and even more preferably 10 to 20 times the weight of the dried polymer.

In the method for decomposing hydrophilic polymers of the present invention, a composter generally used may be used.

Examples thereof include accumulation system apparatuses such as manure shed, ventilating manure shed and box; open stirring system apparatuses such as rotary type and scoop type; and horizontal or vertical closed stirring system apparatuses. Among these, closed stirring system apparatuses using no solar heat are preferred for enhancing the microorganism activity and allowing the degradation to proceed at high speed with good efficiency.

In the present invention, the decomposition of hydrophilic polymers is achieved as follows. The polymer to be decomposed (for example, a disposable diaper or the like containing a hydrophilic polymer) is thoroughly mixed with a compost and accumulated. During the accumulation, fermentation proceeds to effect the composting and the internal temperature elevates. In a high-speed compost reactor, the compost is aerobically cultured preferably under a high temperature condition of 40 to 90°C by externally heating the reactor.

In the composting of hydrophilic polymers according to the present invention, various kinds of additives may be added before and after a compost used or a material to be treated is composted, for the purpose of controlling the decomposition rate or for adjusting the growth of plants serving as a compost.

Examples of the additives include soils, fertilizers, fundamental nutrient source substances, inorganic ingredients, saccharides, amino acids, naturally occurring substances, other antibiotics, vitamins, growth controlling substances and harmful bacteria controlling agents.

Examples of the soils include Akadama soil, black soil, peat moss, culture soil, leaf mold, lime, Kanuma soil, *Leucobryum juniperoideum,* Hyuga soil, sphagnum moss and Keto soil.

Examples of the fertilizer mixed with a culture soil or the like include synthetic fertilizers, animal excrements such as chicken dung and cow dung, fermentation residues, mixed fertilizers, oil cakes, wooden chips, ammonium sulfate, bark manure, ESH manure (chaffs softened by swelling), river sand, pit sand, Yasaku sand, Fuji sand, Asaake sand, and porous minerals such as vermiculite, perlite, zeolite, Osmanda, slag, pumice, bone meal, magnesia lime, dream ball, carbonized chaff and volcanic ashes, however, the present invention is not limited thereto.

The fundamental nutrient source substance is sufficient if it is an organic substance such as sawdust, rice bran, corn bran, sugar cane waste, brew waste, tofu refuse, crumbs, manure, fats and oils, fat, fatty acids or chitin and

can be utilized as a nutrient source for bacteria or plants in the compost.

Specific examples of the inorganic ingredient include copper, nitrogen, phosphorus, potassium, calcium, magnesium, sulfur, iron, manganese, zinc, boron, molybdenum, chlorine, sodium, iodine and cobalt, more specifically, potassium nitrate, sodium nitrate, calcium nitrate, ammonium nitrate, sodium dihydrogenphosphate, sodium ethylenediaminetetraacetate, potassium chloride, calcium chloride, magnesium sulfate, sodium sulfate, ammonium chloride, ammonium sulfate, ferrous sulfate, ferric sulfate, manganese sulfate, zinc sulfate, boron, copper sulfate, sodium molybdate, molybdenum trioxide, potassium iodide, cobalt chloride, sodium phosphate, potassium phosphate, sodium chloride, magnesium chloride, sodium citrate and sulfates of cobalt, molybdenum, copper, iron, manganese or zinc, however, the present invention is not limited thereto.

Specific examples of the saccharides include carbohydrates such as sucrose, inositol, glucose, sucrose, maltose, sorbitol, fructose and mannose, and derivatives thereof, however, the present invention is not limited thereto.

Specific examples of the amino acid include glycine, cystine, glutamic acid, aspartic acid and arginine, however, the present invention is not limited thereto.

Specific examples of the naturally occurring substance include casein hydrolysate, coconut milk, yeast extract, soluble starch, protein, broth (bouillon), peptone, amino acid, liquid extract of potato, carrot or onion, nucleic acid ingredient, malt extract, extract (squeezed) of tomato or potato, gum arabic, tragacanth gum, locust bean gum, guar gum, echo gum, karaya gum, agar, starch, carrageenan, alginic acid, alginates (e.g., sodium alginate), propylene glycol alginate, dextrin, dextran, amylose, gelatin, collagen, pullulan, pectin, amylopectin, starch, sodium amylopectinsemiglycolate, chitin, albumin, polyglutamic acid and polyaspartic acid, however, the present invention is not limited thereto.

In addition, antibiotics such as glycerol, penicillin, chloramphenicol, streptomycin and kanamycin, pigments such as Coomassie Brilliant Blue, Bromothymol Blue and Rose Bengale, vitamins such as biotin, thiamine and vitamin B6, pH adjusting agent, lignin sulfonic acid, sugar sulfonic acid and its related substances, can be added.

Examples of the growth controlling substance include cyclic AMP, various organic acids, hormone agents such as benzylaminopurine and gibberellin, and fungicides such as benomil, methyl thiophanate and thia-bendazole, however, the invention is not limited thereto. The above-described additives can be used individually or in combination of two or more thereof.

As for the method of treating hydrophilic polymers by the compost according to the present invention, a continuous treatment of successively charging polymers into the system of a composting facility or into the decomposition reaction system containing the compost can be employed, needless to say about batch treatment.

Although the time period necessary for the decomposition of polymers varies depending on the factors such as the kind, concentration and polymerization degree (crosslinking degree) of hydrophilic polymer, the decomposition of polymers outstandingly takes place usually within one month after the charging into a compost. The time period necessary for the decomposition also varies depending on the amount of compost, temperature, aerobicity, ventilation amount, humidity or the like in the system and therefore, by optimally controlling these conditions, the decomposition rate can be accelerated to shorten the time period necessary for the decomposition. For example, in the case of decomposing a polymerization crosslinked product under the conditions in accordance with JIS K6953 (IS014855), about 80% of the polymer was decomposed into carbon dioxide and water within 40 days.

The treated product is used by adding it to a soil or a culture soil and in addition, can be used for road bed material, slope face greening material, general greening material, ground or golf links.

In applying the method of the present invention, specific examples of the application method include a method of recovering used diapers or sanitary supplies containing hydrophilic polymer, treating these in a composting facility and using the decomposed product as a compost for agriculture, horticulture or greening, a method of recovering waste solutions discharged from food factories and formed into an agglomerate or a cake with a hydrophilic polymer coagulant, treating these in a composting facility and using the treated material for agriculture, horticulture or greening, a method of recovering excavation surplus soil or hydrous sludge formed into agglomerates or cakes with a hydrophilic polymer, treating these in a composting facility and using the treated material as a ground or road bed material, and a method of recovering used culture soil or culture medium containing a hydrophilic polymer, treating it in a composting facility and using the treated material as a manure or a culture soil for agriculture, horticulture or greening.

The decomposition method of the present invention can also be applied to a method for preventing, in transporting garbage or the like containing excess water, the leakage of excess water, where the excess water is absorbed to a water-absorptive resin. The garbage in general contains water in many cases and if the garbage discarded is enclosed in a bag made of polyethylene or the like, excess water sometimes stays in the bag. In carrying this garbage-containing bag, if the bag is ruptured, the water therein leaks out. This water is malodorous in many cases and when leaked in a house, on a road, in a garden or the like, cruel discomfort is caused and gives nuisance to neighborhoods. At this time, when a water absorptive resin is placed in the bag, the excess water is absorbed and prevented from leaking out. For the sake of convenience, the water absorptive resin may be formed into sheet, film, net or fiber and used to prevent the leakage from the ruptured part of the bag.

In the composting facility, the above-described problem may similarly arise, that is, the excess water inhibits

the microorganism activity to retard the decomposition of the material treated. If the decomposition is retarded, this leads to troubles, for example, the apparatus may undergo unstable operation or encounter difficulty in the control of operation, the decomposition proceeds incompletely, or the decomposer bacteria may die out. In this case, by charging a water absorptive resin into the composting facility to absorb the excess water and then solidifying it, the above-described problem can be overcome.

The present invention is described in greater detail and more specifically below by referring to Examples, however, the present invention should not be construed as being limited thereto.

**Examples**

Example 1

Crosslinked sodium polyacrylate was mixed with 80 g of compost (30 g as dry weight) produced based on garbage such as vegetable scrap discarded from homes. At this time, the crosslinked sodium polyacrylate used was previously allowed to absorb 50 g (10 times the dry weight of polymer) of water. In accordance with the method described in JIS K6953 (ISO 14855), the mixed sample (135 g in total of polymer and compost) was charged into a closed reactor and left standing in a constant-temperature bath at 58°C. An air from which carbon dioxide was previously removed using a 2N sodium hydrate solution and silica gel, was passed through the reactor at a flow rate of 3 mL/min to keep the aerobic conditions. Separately, a reactor where a control having no addition of crosslinked sodium polyacrylate was added and a reactor where, similarly to the above, Avicel as a positive control substance was added, were prepared and left standing in a constant-temperature bath and an air was passed therethrough.

When a reaction takes place in the reactor to degrade the crosslinked sodium polyacrylate into carbon dioxide and water, the carbon dioxide generated in the reactor is discharged from the system. This carbon dioxide discharged was trapped with a 2N sodium hydrate solution and the amount of carbon dioxide absorbed was determined by chemical titration at intervals of a fixed time.

The decomposition percentage of polymer was determined according to the following formula:

$$\text{Decomposition percentage (\%)} = [(CO_2)_T-(CO_2)_B]/[ThCO_2] \times 100$$

wherein

- $(CO_2)_T$: amount of carbon dioxide (g) generated and absorbed in the compost vessel containing crosslinked sodium polyacrylate;
- $(CO_2)_B$: amount of carbon dioxide (g) generated and absorbed in the reactor of control; and
- $ThCO_2$: amount of carbon dioxide (g) theoretically generated when the crosslinked sodium polyacrylate was completely decomposed.

Fig. 1 shows the thus-obtained decomposition curve of sodium polyacrylate. As seen from the Figure, about 80% of the crosslinked sodium polyacrylate was decomposed within about 80 days.

Example 2

Fig. 2 shows the decomposition curve when the temperature of the constant-temperature bath was set to 45°C in Example 1. The decomposition degree was about 50% in 40 days and this result is on the same level as in the case of 58°C.

Example 3

Fig. 3 shows decomposition curves in respective cases where the amount of water absorbed to the crosslinked sodium polyacrylate in Example 1 was 10 times the weight of polymer, where 50 times thereof and where water was not absorbed.

As seen from these results, the decomposition percentage of crosslinked sodium polyacrylate changes depending on the water content and in Example 3, most effective decomposition was attained when the amount of water absorbed was 10 times the weight of polymer.

Example 4

Polyacrylamide allowed to absorb water in an amount of 10 times the dry weight was charged into a compost and cultured at 55°C in the same manner as in Example 1. Then, the decomposition was examined. Fig. 4 shows the decomposition curve at this time. The decomposition degree was 50% in 40 days.

Example 5

Polyvinyl alcohol allowed to absorb water in an amount of 10 times the dry weight was charged into a compost and cultured at 60°C in the same manner as in Example 1. Then, the decomposition was examined. Fig. 5 shows the decomposition curve at this time. The decomposition degree was 40% in 10 weeks.

Example 6

Crosslinked sodium polyacrylate was decomposed under the same conditions as in Example 1 except that 30 g of wood flour having added thereto 60 g (in terms of solid content: 1,300 ppm) of compost extract water was used in place of 80 g of the compost of Example 1. As a result, about 20% could be decomposed within 70 days. From this, it is revealed that the decomposition can be accelerated also by placing the microorganism contained in the compost in an artificially aerobic environment.

**Effects of the Invention**

As is described in the foregoing pages, hydrophilic polymers can be effectively and rapidly decomposed by the treatment in the compost by the present invention. According to the present invention, hydrophilic polymers can be regenerated while preventing the polymer from remaining in an environment and imposing a considerably heavy load on the environment and moreover, can be treated together with other useful organic resources in the compost.

**BRIEF DESCRIPTION OF THE DRAWINGS**

Fig. 1 is a decomposition curve of sodium polyacrylate in Example 1.

Fig. 2 is a decomposition curve of sodium polyacrylate in Example 2.

Fig. 3 is a decomposition curve of sodium polyacrylate in Example 3.

Fig. 4 is a decomposition curve of polyacrylamide in Example 4.

Fig. 5 is a decomposition curve of polyvinyl alcohol in Example 5.

Fig. 6 is a decomposition curve of sodium polyacrylate in Example 5.

**Claims**

1. A method for decomposing hydrophilic polymers, comprising contacting a hydrophilic polymer or a hydrophilic polymer-containing material with a microorganism at a temperature of 40 to 95°C under aerobic conditions.

2. The method according to claim 1, wherein the microorganism is contained in a compost.

3. The method according to claim 2, wherein the compost is a compost manufactured based on an organic waste.

4. The method according to any one of the preceding claims, wherein the microorganism is at least one microorganism selected from the group consisting of the genera *Rhizopus, Saccharomyces, Candida, Aspergilllus, Penicillium, Trichodema, Streptomyces, Frankia, Azotobacter* and *Bacillus.*

5. The method according to any one of the preceding claims, wherein the hydrophilic polymer is a water-soluble

polymer or a crosslinked polymer thereof.

**6.** The method according to any one of the preceding claims, wherein the hydrophilic polymer is a (co)polymer containing a monomer unit of the (meth)acrylic acid type.

**7.** The method according to any one of the preceding claims, wherein the hydrophilic polymer is a copolymer crosslinked by a polymerizable crosslinking agent or a reactive crosslinking agent.

**8.** The method according to any one of the preceding claims, wherein the hydrophilic polymer-containing material is any one of hydrous sludge, excavation surplus soil, construction sludge, agglomerate aggregated by a coagulant, and a medical or industrial waste cake.

**9.** The method according to any one of the preceding claims, wherein the amount of water contained in the material to be treated is previously adjusted.

**10.** The method according to claim 9, wherein the water is absorbed by the polymer.

**11.** The method according to any one of the preceding claims, wherein the internal temperature of the compost is kept at 40 to 90°C.

**12.** The method according to any one of the preceding claims, wherein the temperature is at least 45°C.

**13.** The method according to any one of the preceding claims, wherein the temperature is 55 to 90°C.

**14.** A compost obtainable by decomposing a hydrophilic polymer or a hydrophilic polymer-containing material by the decomposition method as described in any one of claims 1 to 13.

**15.** The use of a compost according to claim 14 in agriculture, horticulture, slope face greening or general greening.

**16.** The use of a compost according to claim 14 as a road-bed material for roads, grounds or golf links.

Fig. 1

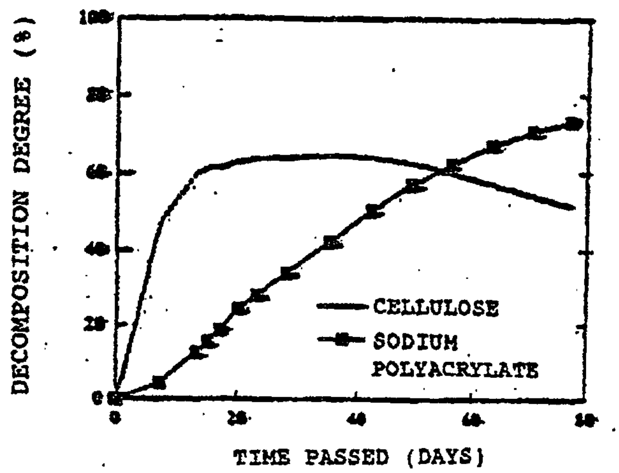
DECOMPOSITION DEGREE (%)
TIME PASSED (DAYS)
CELLULOSE
SODIUM POLYACRYLATE

Fig. 2

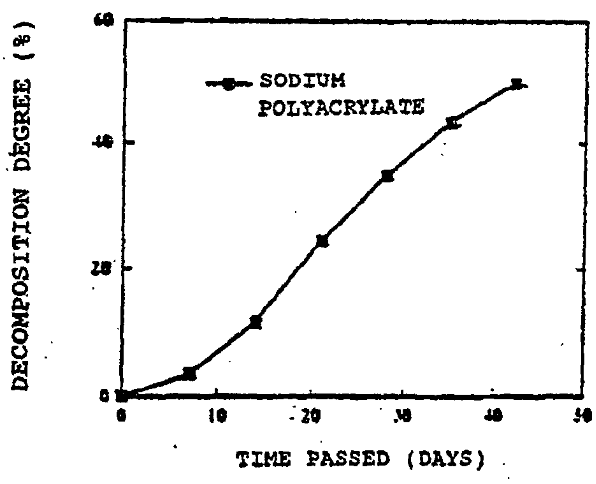
DECOMPOSITION DEGREE (%)
TIME PASSED (DAYS)
SODIUM POLYACRYLATE

Fig. 3

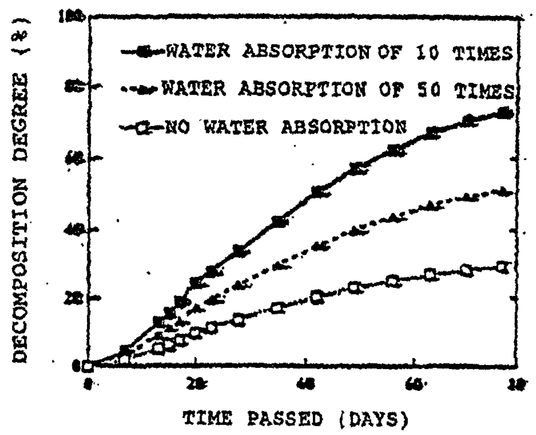


Fig. 4

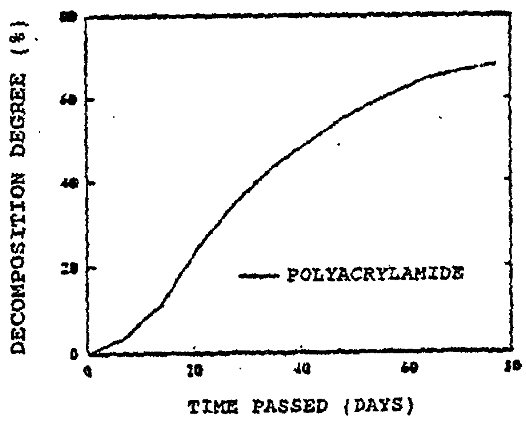


Fig. 5

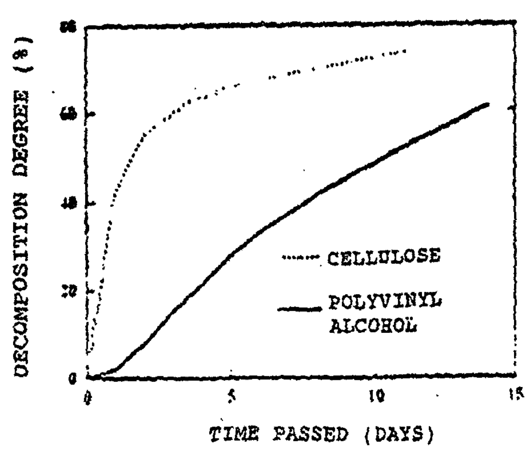

Fig. 6

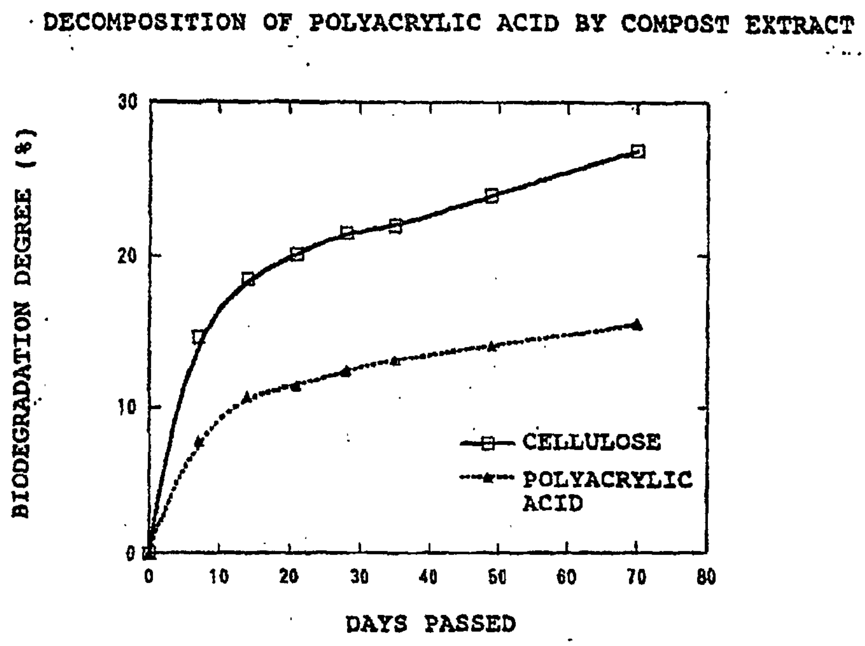
DECOMPOSITION OF POLYACRYLIC ACID BY COMPOST EXTRACT
BIODEGRADATION DEGREE (%)
30
20
10
0
0
10
20
30
40
50
60
70
80
DAYS PASSED
CELLULOSE
POLYACRYLIC ACID